# EUROPEAN PATENT SPECIFICATION

(11) **EP 3 319 092 B1**
(45) Date of publication and mention of the grant of the patent: **05.01.2022**
(21) Application number: 17208100.2
(22) Date of filing: 01.11.2010
(51) Int. Cl.: H01B 9/02, E21B 17/00, F16L 53/00

(54) **POWER CABLE WITH SEMICONDUCTIVE PROFILES AND SEAWATER CHANNELS**
STROMKABEL MIT HALBLEITENDEN PROFILEN UND MEERWASSERKANÄLEN
CÂBLE D'ALIMENTATION COMPORTANT DES PROFILS SEMI-CONDUCTEURS ET DES CANAUX D'EAU DE MER

(30) Priority: 30.10.2009 NO 20093260
(43) Date of publication of application: 09.05.2018
(62) Divisional of application: 10830245.6
(73) Proprietor: Aker Solutions AS, 1325 Lysaker (NO)
(72) Inventor: FJELLNER, Arve, 3060 Svelvik (NO); HEGGDAL, Ole A., 1475 Finstadjordet (NO)
(74) Representative: Protector IP AS

(56) References cited:
- WO-A1-2009/128725
- JP-A- 2007 073 519
- NO-B1- 320 972
- NO-B1- 323 941
- US-A- 6 046 404
- US-A1- 2007 044 992
- US-B1- 6 417 457
- HVIDSTEN S ET AL: "HV cable design applicable for direct electrical heating of very long flowlines", OCEANS '04. MTTS/IEEE TECHNO-OCEAN '04 KOBE, JAPAN NOV. 9-12, 2004, PISCATAWAY, NJ, USA,IEEE, vol. 1, 9 November 2004 (2004-11-09), pages 257-263, XP010776578, DOI: 10.1109/OCEANS.2004.1402926 ISBN: 978-0-7803-8669-3

## Description

The present invention relates to a power umbilical comprising
- at least one power cable to transfer large amounts of electric energy/power,
- a set of elongate profile elements, being arranged in a twisted bundle around the at least one power cable
- and a protective sheath encapsulating the at least one power cable and the elongate profile elements.

Initially, the basis for the present invention, was to arrive at a mechanically protected power cable which was especially prepared as a DEH cable (Direct Electric Heating) and designed to be deployed into the sea. Such DEH cables are used to heat pipelines transporting produced hydrocarbons in order to prevent hydratization. The DEH cable can for example be strapped securely to the pipeline, a so-called "Piggyback" solution. The DEH cable constitutes one of the conductors and the pipeline itself constitutes the other conductor in the heating system. Such a heating system is disclosed and described in closer detail in NO 323516.

It is a well known matter that when alternating current (AC) is supplied in a conductor, capacitance between the metallic conductor and the environment (remote ground) will arise. The capacitive AC current that arises is called charging currents.

Traditionally, such high voltage power cables have been designed with cable armoring and cable mantles, or what is called a screen. The screen is present to take care of and drain away the capacitive currents that arise when these high voltage cables are in operation and transfer large amounts of electric energy/power. This is now solved in a different way and is developed in connection with existing high power umbilicals. The existing high power umbilicals inherently have the above mentioned mechanical protection, namely as a filler material in the form of stiff, elongate plastic elements/profile elements. Why a need to solve the screening in a different way exists, is inter alia reasoned as follows. For a cable extending from the seabed and up to a floating vessel, the cable needs to pass through a dynamic zone, normally in the sea surface area. A cable that operates in the dynamic zone is imparted undesired movements (by waves, wind, currents, etc.) that over time give rise to fatigue, and particularly in the mentioned cable mantle which is designed to take care of the capacitive currents. When the cable is of heavy gauge, and the mantle is located far from the center line of the cable, the mantle in particular is subjected to fatigue damage and subsequent rupture in the dynamic zone. Thus, it has been greatly desired to find a replacement for this cable mantling, which normally has been a thick foil of copper or other suitable metallic material. JP2007073519 discloses a power cable having a triangular plastic structure made of high density polyethylene for shock absorption arranged in a gap between two core wires and a casing. A cavity chamber having two walls made of semiconductive polyethylene material is arranged at an apex of the triangular structure. An optical waveguide is inserted in this cavity. However there is no disclosure of any draining of capacitive currents to the sea.

In some way or another, the capacitive currents that occur within the sea cables have to be drained off to the surrounding seawater in order to limit axial capacitive currents through the transverse cross section of the cable and the voltage built up along the outer sheath.

Surprisingly it has turned out that the described profile elements and the outer sheath of the umbilical can be made of a material that has good semiconducting properties and can be taken in use with the present power umbilical. Together with seawater in the cross section, they will together conduct current along the umbilical.

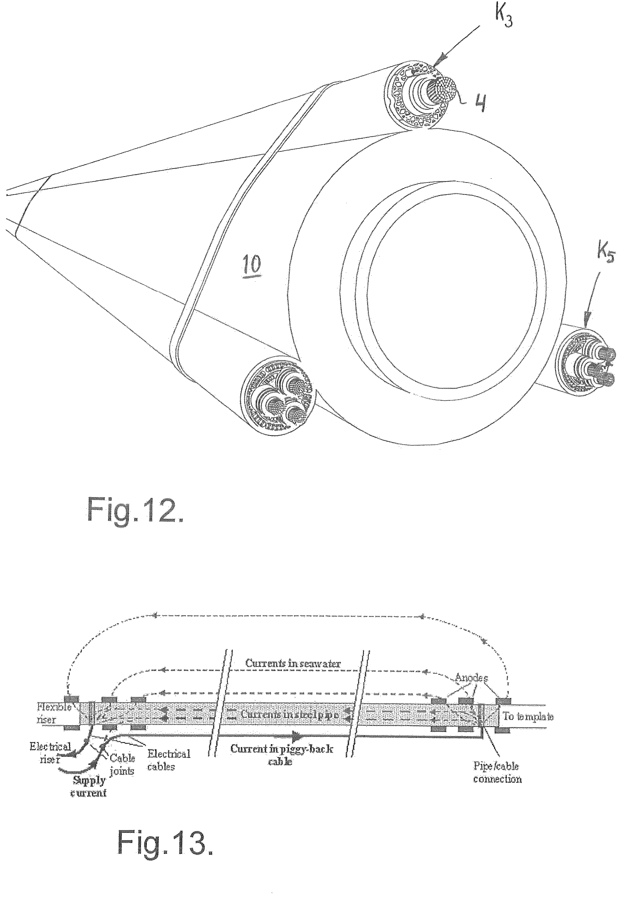

Transfer of current between the pipe and the seawater takes place via anodes and the current in the seawater flows in parallel with the pipe. The length of the transfer zone is given by physical laws and is normally 50m for 60Hz application. See fig. 13. Complex electro magnetic calculations are necessary in order to determine the current distribution between the pipe and the seawater. These calculations are connected to physical laws as "neighboring effect" and "skin effect".

Thus, according to the present invention as defined in independent claim 1, at least one of the elongate profile elements, is made of a semiconducting material, said semiconducting material being able to drain off, or dissipate, capacitive currents arising in the power umbilical when the at least one power cable conducts large amounts of electric energy/power, said elongate profile elements further comprising longitudinal channels adapted to communicate with radial extending holes or slits in the profile elements and through the protective sheath such that when the power umbilical is deployed into the sea and the water is filling the channels, the holes or slits are transporting the capacitive currents into the surrounding sea water.

It is, however, to be mentioned that the power umbilical according to the present invention can be supplied in many variants and embodiments that are especially adapted to the specific field of use of the umbilical. The common denominator for them all is that they need to have good ability to dissipate or drain away capacitive currents without the use of a metallic screen, as traditionally done. This good ability to drain away capacitive currents takes place, inter alia, through the use of the extruded profile elements that both have the good capacity to create mechanical protection for a current transferring cable and simultaneously act as a semiconductor that contribute to drain off capacitive currents.

In addition, the integrated high power umbilical can be further processed in order to increase the dissipation of capacitive currents. This primarily takes place in that radially extending channels are provided through the outer sheath of the umbilical and the hollow, extruded profile elements so that the seawater present within the profile elements and the radially extending holes, or apertures, by themselves form communication routes for drainage, or dissipation, of capacitive currents.

As a further option, one may provide a fibre optics conductor to the high power umbilical for use to monitor the condition of the high power umbilical on a continuous basis. By too excessive heat development, the fibre optics conductor will receive a temperature increase and this, in turn, provides a signal to a monitoring station that takes measures in order to stop the current.

### News and advantageous features of the cables are:

- The cable has higher efficiency than other cables due to lower energy losses
- Use of semiconductive cables in high power umbilicals (with control functions)
- Use of this cable design in dynamic high power umbilicals provides longer life time against fatigue
- Use of this cable design in dynamic high power umbilicals enables sturdy deep-sea solutions
- Use of elongate metallic elements in order to drain out capacitive currents along the length of the umbilical
- Use of semiconductive axial profiles in order to obtain contact between single-phase or three-phase high power cables
- Uses the profiles as additional protection for the cables and as axial armoring

### With the new cable the following are achieved:

∘ Less complicated cable
∘ Less effect loss
∘ Sturdy and impact resistant cable
∘ Less inductive loss (10-20%) in the cable
∘ Less heat generation in I-pipes (dynamic applications)
∘ Reduced umbilical diameter and weight
∘ Longer lengths without joints or splices
∘ Lower costs
∘ Simpler installation
∘ Significant improved fatigue properties
∘ Usable for all voltage intervals
∘ Cable transverse cross section up to 2000mm²
∘ Design life span 30 years

Thus this integrated high power umbilical includes high voltage power cables without the traditional armoring and screening. Umbilicals use cables with semiconductive outer jacket only. The capacitive currents are drained out through the outer jacket of the cable and conducted out to the sea. The capacitive currents are eliminated by contact with each other along their length. Lack of contact with seawater/ground will probably result in immediate consume of and melting of the semiconductive jacket. Further, semiconductive cables omit steel armoring or screen, but having stiff, elongate plastic elements for static and dynamic applications, have never been used previously. This solution is applicable for long static cables/umbilicals and short dynamic cables/umbilicals.

Preferably, the electric high power cables, the filler material and the at least one electric conductor can be SZ laid and closed, i.e. alternately laid and closed by continuously alternating direction, in the entire or part of the longitudinal extension of the high power umbilical, combined with that the SZ laid and closed bundle is kept fixed substantially torsion stiff by the protective sheath. As an alternative, the integrated high power umbilical can be laid and closed in the traditional way into a helix having a relatively long laying length.

In one embodiment, both at least one of the stiff, elongate plastic elements and the protective outer sheath are made of a semiconducting material, for example polyethylene (PE), polyvinylchloride (PVC), polypropylene (PP) and acrylonitrile butadiene styrene (ABS), with addition of carbon.

In one embodiment, at least one fibre optics conductor can be arranged in the power umbilical, which fibre optics conductor having one or more optical fibre threads or filament adapted to monitor the condition of theh power umbilical continuously and generate a warning signal in case of temperature variation or an elongation within a fibre.

Preferably, at least one additional metallic electric conductor is arranged in the transverse cross section of the power umbilical and extends in the longitudinal direction of the power umbilical, said at least one electric conductor being located separate from and external of the power cables, said at least one electric conductor being able to drain off, or dissipate, capacitive currents arising in the power umbilical when conducting large amounts of electric energy/power.

In another embodiment, or supplementary, the electric high power cables can be three-phase cables, the three-phase cables being arranged in a triangle within the transverse cross section thereof, that are either in contact with each other or with the semiconductive profiles.

In a more complex embodiment the power umbilical can include electric wires and/or fibre optics conductors which also are laid and closed together into a bundle in a SZ configuration and are located internal of the outer sheath, or alternatively are laid and closed together into a bundle continuously helically.

In addition, it may include at least one load carrying element that is predetermined located in the transverse cross section of the high power umbilical, where the element(s) also being laid and closed together into a bundle in a SZ configuration, or alternatively laid and closed together into a bundle in continuously helically.

The umbilical may also include an anti rotation band, or strength band, or a tape, which is helically winded about the bundle just internal of the protective sheath. Alternatively, the strength band, or the tape, is helically winded around the bundle in two or more layers, laid and closed together into a bundle in opposite directions.

In possible embodiments, the load carrying elements can be light weight rods of composite material having embedded carbon fibres, so-called carbon fibre rods, and/or steel threads, steel wire, and/or fibre rope and/or polyester rope.

In particular cases, the power umbilical can include at least one fluid pipe in its transverse cross section, which pipe can be made metal and/or plastic material laid and closed together into a bundle in the same configuration as the other elements.

Preferably the at least one fiber optic conductor is arranged within a longitudinally extending channel in the elongate profile elements ) which form the protective layer surrounding the power cable and the insulation of the power cables , said fibre optics conductor having one or more optical fibre threads or filaments adapted to monitor the condition of the high power umbilical on a continuously and generate a warning signal in case of a temperature increase or an elongation within the at least one fibre optics conductor.

An elongation in a fibre will provide a similar signal that the umbilical has been inflicted a curvature or damage.

Alternatively, the at least one fibre optics conductor can be arranged within an insulation layer that encapsulates the power cable, said fibre optics conductor having one or more optical fibre threads or filaments adapted to monitor the condition of the power umbilical continuously and generate a warning signal in case of temperature increase or an elongation within the at least one fibre optics conductor.

The unique dynamic umbilical design of the applicant makes the use of this technology possible since the cables are carefully protected by the filler material in the form of profiled elongate channel elements. Without the use of surrounding elongate plastic elements/plastic profiles, the cables will be too weak regarding installation loads and operational strain and stress. The cables have a simplified design. Mechanical protection and structural strength are transferred to the umbilical structure or design. The axial strength is carried by external load carrying elements integrated in the transverse cross section. The design will therefore not require any additional water barrier. The semiconducting materials are new and the materials are tested with excellent results. The semiconductive materials are also waterproof up to 90°C over 20 years. Longer operations are not tested. For normal power transfer applications a designed life time of 30 years is foreseen.

Thus, it is to be understood, in accordance with what is described above, that the following alternatives have come up, which are reflected in the patent claims, to conduct or direct the capacitive currents out into the sea:
- conduct the capacitive current along the cable internally of the umbilical via a metallic electric conductor
- conduct the capacitive current through the elongate plastic elements of the umbilical and outer sheath by using electric semiconductive plastic material in the plastic elements and/or sheath to drain out the currents from the inside
- make the plastic elements and the sheath open by holes and slits such that the water can transport the currents out and into the seawater
- three-phase cables is arranged in a triangle or in contact with each other or with the semiconductive plastic elements

It is to be understood that it will be possible to combine one or more of the alternatives indicated above.

Other and further objects, features and advantages will appear from the following description of preferred embodiments of the invention, which is given for the purpose of description, and given in context with the appended drawings where:
Fig. 1 shows a transverse cross sectional view through a dynamic power umbilical according to the invention, which also is representative for different power umbilicals of this nature,
Fig. 2 shows an alternative transverse cross sectional view through a power umbilical according to the invention, which also is representative for other power umbilicals of this nature,
Fig. 3 shows a one-conductor power umbilical which is in particular prepared as a DEH cable (Direct Electric Heating),
Fig. 4 shows a one-conductor power umbilical in similarity with that shown in fig. 3, which also includes load carrying elements in the form of carbon fibre rods, Fig. 5 shows a three-conductor DEH power umbilical,
Fig. 6 shows a two-conductor dynamic DEH umbilical having a large number of carbon fibre rods designed for particularly deep waters,
Fig. 7 shows a combined two-conductor dynamic DEH umbilical and six-conductor high voltage cable for subsea equipment and that includes carbon fibre rods,
Fig. 8 shows a twin-conductor dynamic DEH umbilical including weight elements,
Fig. 9 shows a "piggyback" umbilical on a production pipe,
Fig. 10 shows schematically a transverse cross section through a DEH umbilical having radial extending water channel,
Fig. 11 shows schematically current and voltage diagrams for different distances between the water channels in the longitudinal direction of the umbilical and without any fibre optics conductor present in the cross section, Fig. 12 shows a variant of the piggyback umbilical shown in fig. 9, and Fig. 13 shows schematically the electric current distribution in a DEH system.

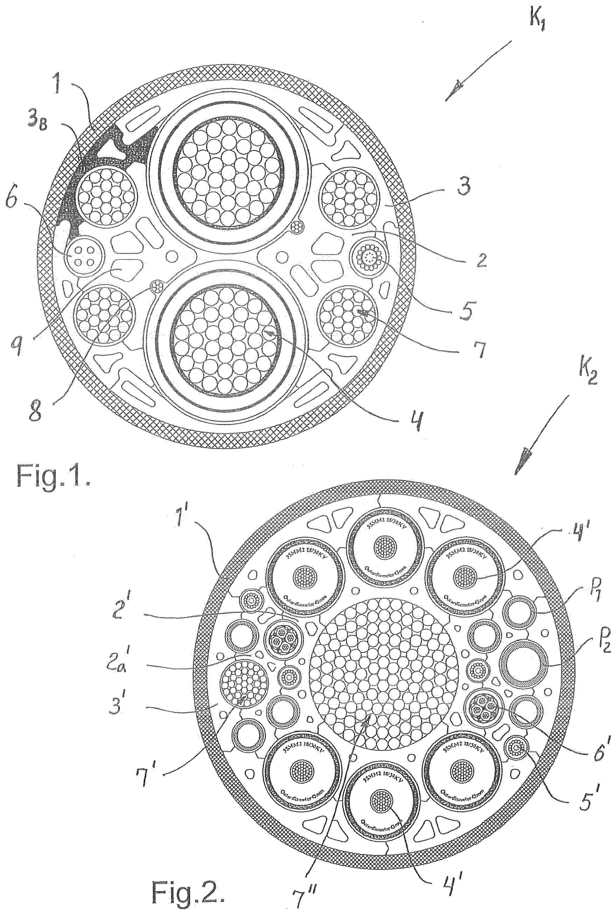

In the shown embodiment according to figure 1, the power umbilical K₁, which in general description is named K, is basically constructed of the following elements: a bundle of elongate elements consisting of inner and outer channel elements 2, 3, power cables 4 to transfer large amounts of electric power/energy, fibre optics conductors 5 and load carrying elements 7, that are laid and closed together into said bundle. In addition, a filler material 6 that balances for the fibre optics cable 5 is indicated. The laying and closing is either SZ or traditional helical laying and closing. The outer channel elements 3 can for example be made of polyvinyl chloride (PVC) and the inner channel elements 2 of semiconducting material. The PVC material needs a mix with a different substance in order to make it semiconductive, for example intermixture of carbon. The power cables 4 can have a semiconducting jacket of polyethylene. The load carrying elements 7 can be in the form of steel wires, alternatively carbon rods, which are twisted into bundles. It is further to be understood that strictly one of the channel elements 2, 3 only needs to be of semiconducting material, while the remaining channel elements 2, 3 can be made of traditional PVC. In fig. 1 the black channel element 3_{B} for example, can represent the semiconductive channel element. The fibre optics conductor 5, made up by one or more optical fibre threads or filaments, are provided to monitor temperature changes or changes in elongation of the threads and then be able to signalize errors in the umbilical K. Other suitable material can for example be PP or ABS.

In addition, in one embodiment, the power umbilical K can include at least one metallic electric conductor, in figure 1 given the reference number 8, which is arranged in the cross section of the power umbilical K and extends in the longitudinal direction of the power umbilical K. The conductor or conductors 8 are located separate from and external of the power cables 4. The at least one conductor 8 is, as mentioned, able to drain away capacitive currents that arise in the power umbilical K when the power cable 4 conducts large amounts of electric energy/power.

The laid and closed bundle can optionally be kept together and in place by a strength band. An outer sheath or jacket 1, for example of polyethylene PE, is extruded onto the bundle. Polyethylene with addition of carbon is considered as semiconductive. As mentioned the cross section can also include fluid pipes (not shown) in some embodiments or variants.

The inner and outer channel elements 2, 3 are laying at least partly around and between the electric cables 4 and are typically made as rigid, elongate, continuous elements of plastic material such as PVC. The electric cables 4, the possible wires/fibre optics conductors 5, the filler material 6 and the channel elements 2, 3 and the at least one load carrying element 7, are as mentioned alternating laid and closed, i.e. having steadily changing direction, in the entire or part of the longitudinal extension of the power umbilical, alternatively continuously helical. In addition, the laid and closed bundle is kept substantially torsional stiff by the protective sheath 1, optionally by the addition of a strength band that is helically wound around the bundle immediate inside the protective sheath 1.

As mentioned, the rigid elongate plastic elements 2, 3 can be made of semiconducting plastic material. Optionally, only the inner channel elements 2 or only the outer channel elements 3, or as mentioned only one single channel element 3_{B}, can be semi conducting. As mentioned, also the protective jacket 1 can be made of semiconductive material.

The rigid elongate profile elements 2, 3 can include longitudinally extending channels 9 that communicate with radial extending holes, slits or similar in the profile elements 2, 3 and through the protective jacket 1 such that the water that fills the channels 9 and the holes are able to transport away the capacitive currents into the surrounding sea water.

The electric power cables 4 can in turn be three-phase cables which in the cross section thereof can be arranged in a triangle, which either are in contact with each other or with the semiconducting plastic profiles 2, 3.

As an illustrating example of the dimensions in question, without thereby being limiting, the cable can have a transversal cross section of 2000mm². Designed life time is 30 years. It is further to be understood that ordinary electric wires for control functions, can in addition possibly be included in all embodiments and variants, all according to actual needs.

Figure 2 shows a second embodiment of a power umbilical K₂, which in turn is basically constructed of the following elements: a bundle of elongate elements consisting of inner, intermediate and outer channel elements 2', 2a', 3', power cables 4' to transfer large amounts of electric power/energy, fibre optics conductors 5' and load carrying elements 7', 7", that are laid and closed together into said bundle. In addition, smaller and larger steel pipes P₁, P₂ to transfer fluids are indicated. The laying and closing is either SZ or traditional helical laying and closing. The outer channel elements 3' can for example be made of polyvinyl chloride (PVC) and the inner channel elements 2' of semiconducting material. The power cables 4' can have a semiconducting jacket of polyethylene. The load carrying elements 7', 7" can be in the form of steel wires, which are twisted into bundles. Here one load carrying element 7" is a central wire.

In addition, the power umbilical K₂ can include one or more low voltage electric wires 6', which is arranged in the cross section and extends in the longitudinal direction of the power umbilical. The low voltage wires 6' are placed separate from and external of the power cables 4'.

The bundle can optionally be kept together and in place by a strength band. An outer sheath or jacket 1', for example of polyethylene (PE), is extruded onto the bundle.

The outer, intermediate and inner channel elements 2', 2a', 3' are laying at least partly around and between the electric power cables 4' and are typically made as rigid, elongate, continuous elements of plastic material. The power cables 4', the possible wires/fibre optics conductors 5', 6', the channel elements 2', 2a', 3' and the at least one load carrying element 7', 7", are as mentioned alternating laid and closed, i.e. having steadily changing direction, in the entire or part of the longitudinal extension of the power umbilical K₂, alternatively continuously helical. In addition, the laid and closed bundle is kept substantially torsional stiff by the protective sheath 1', optionally by the addition of a strength band that is helically winded around the bundle immediate inside the protective sheath 1'.

As mentioned, the rigid elongate plastic elements 2', 2a', 3' can be made of semiconducting plastic material. Optionally, the inner channel elements 2' only, the intermediate elements 2a' only, the outer channel elements 3' only, or, as mentioned, only one single channel element can be semiconducting. Also, the protective jacket 1' can be made of semiconductive material.

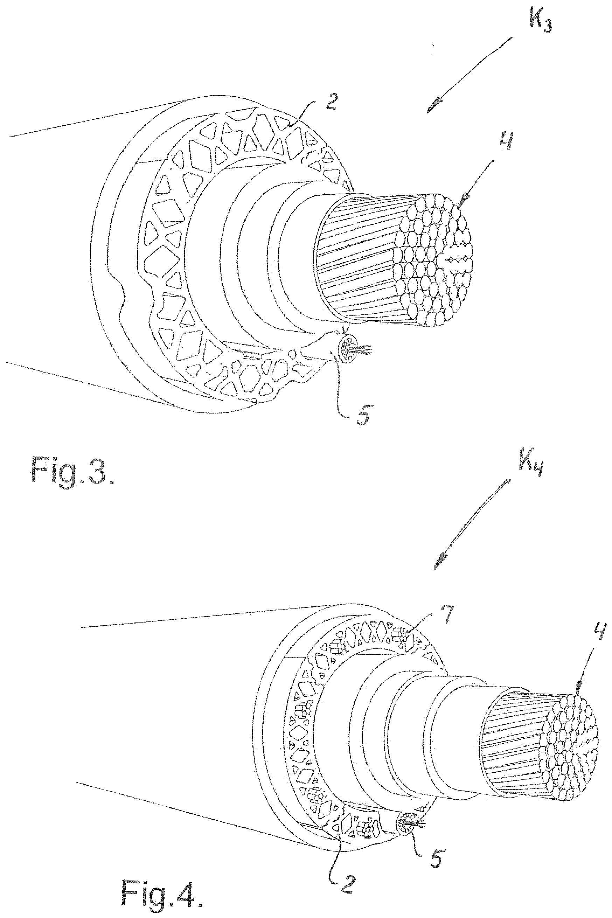

Fig. 3 shows a third and simplest embodiment of a DEH/piggyback power umbilical K₃. This is a single conductor power umbilical K₃ which is specially designed and prepared to be a DEH cable (Direct Electric Heating). The power umbilical K₃ is constructed of one single power cable 4 and a set of elongate profile elements 2 that are laid in a ring around the power cable 4. At least one of the profile elements is semiconductive. Several layers of insulation are present therebetween. However, the umbilical cannot have any metallic screen since this would influence on the inductive function of the umbilical. Also, a fibre optics conductor 5 is shown, but that is not absolutely mandatory, but may preferably be there. This is a fibre optic conductor that monitors the condition of the power umbilical K₃ and signalizes possible errors in that a temperature increase arises within the optical fibre. In a variant the at least one fibre optics element 5 can be arranged within the insulating layer itself that surrounds the power cable 4. Normally, in addition, such cable also has a magnetic connection to the pipe.

Fig. 4 shows a fourth and second simplest embodiment of a power umbilical K₄. The power umbilical K₄ is typically used during installation and repair. This is also a single conductor power umbilical K₄ which is prepared to be a DEH piggyback cable (Direct Electric Heating). The power umbilical K₄ is constructed corresponding to the power umbilical K₃, but with the addition of bundles assembled of carbon fibre rods 7 which represent load carrying elements. Axial strength is needed under retrofit installation on the seabed and during repair.

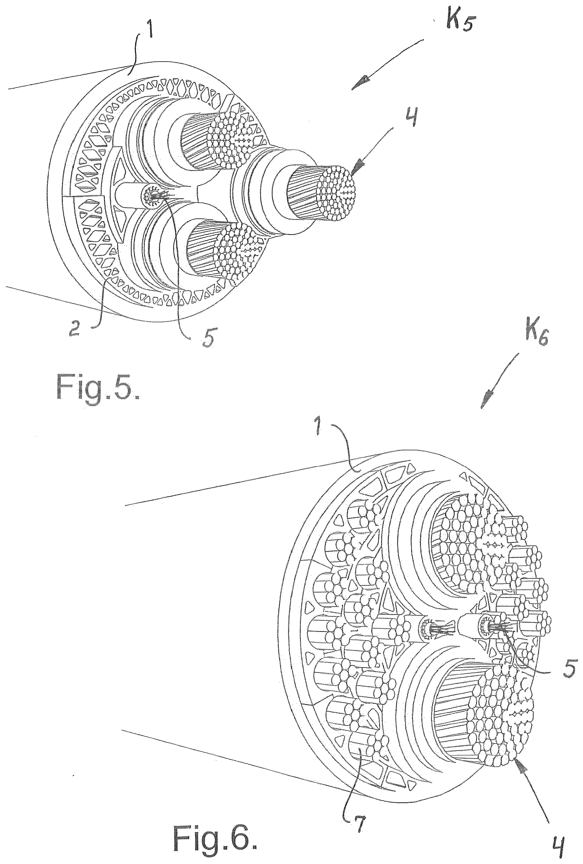

Fig. 5 shows a power umbilical K₅ in the form of a three conductor DEH power umbilical having three heavy gauge power cables 4, one or two fibre optics conductors 5, outer jacket 1 and the mentioned profile elements 2 which are adapted to this power umbilical K₅.

Fig. 6 shows a power umbilical K₆ in the form of a two conductor dynamic DEH power umbilical having two heavy gauge power cables 4, one or more fibre optics conductors 5, outer jacket 1, a great number of carbon fibre rods 7 and the mentioned profile elements 2 which are just adapted to this power umbilical K₆. The power umbilical K₆ is designed for particularly deep waters.

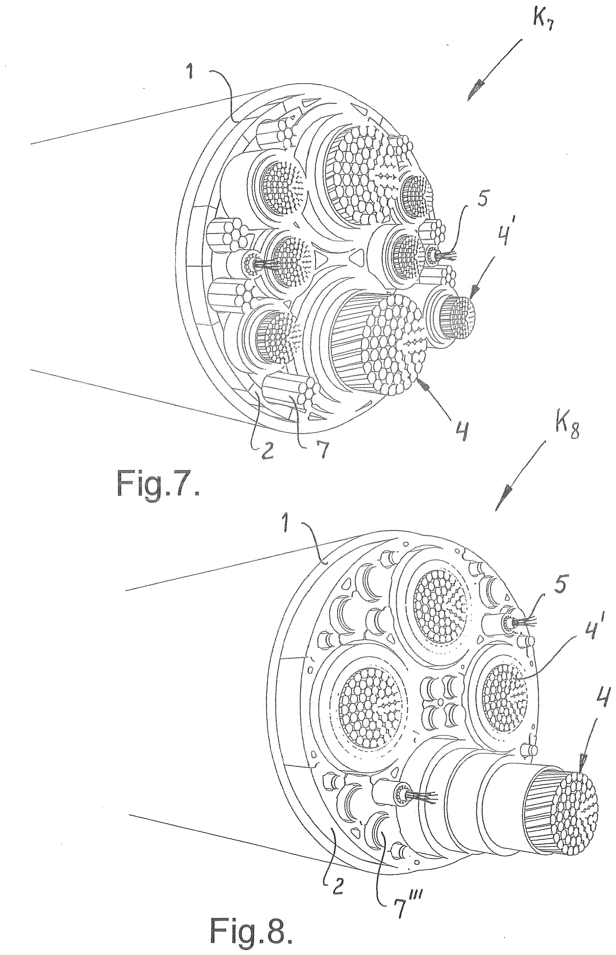

Fig. 7 shows a dynamic power umbilical K₇ in the form of a combined two conductor dynamic DEH power umbilical and six conductor high voltage cable for subsea equipment. The power umbilical K₇ includes two heavy gauge power cables 4, six high voltage cables 4', one or more fibre optics conductors 5, outer jacket 1, a great number of carbon fibre rods 7 and the mentioned profile elements 2 which are just adapted to this power umbilical K₇. The power umbilical K₇ is designed for combining a DEH function in the cable with power cables to subsea equipment such as pump stations.

Fig. 8 shows a power umbilical K₈ in the form of a twin conductor dynamic DEH power umbilical designed to be deployed in water depths less than about 1000meters. The power umbilical K₈ includes four heavy gauge power cables 4, one or more fibre optics conductors 5, outer jacket 1, a great number of weight adding steel rods 7‴ having larger and smaller cross section and the mentioned profile elements 2 which are just fitted to this power umbilical K₈.

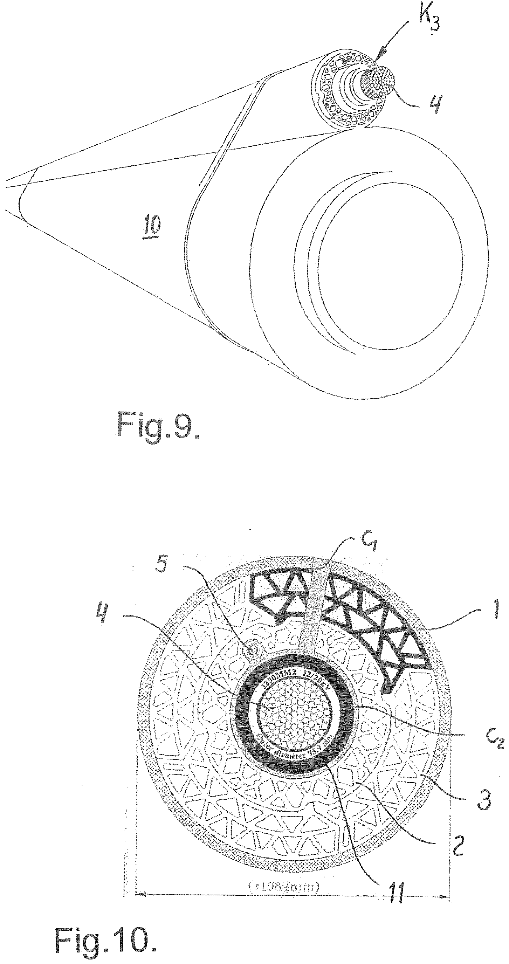

Fig. 9 shows a "piggyback" cable K₃ on a production pipe 10 in the way the cable K₃ typically is laid and strapped securely in a DEH heating system.

Fig. 10 shows schematically a section through a DEH cable where a radially extending water channel C₁ is clearly marked and shown. The water channel C₁ can be a bore, for example a 10mm hole through the outer jacket 1, the profile elements 2, 3 and in towards the power cable 4 proper. It is further shown a channel C₂ between the outer sheath 11 of the power cable 4 and the inner wall of the profile elements 3. The thickness of the channel is indicated to be 3mm, without being a limitation. Thus, a channel C₂ is arranged in the entire longitudinal direction of the cable and interrupted by radial extending channels C₁ at certain intervals. Also, a fibre optics cable 5 is indicated.

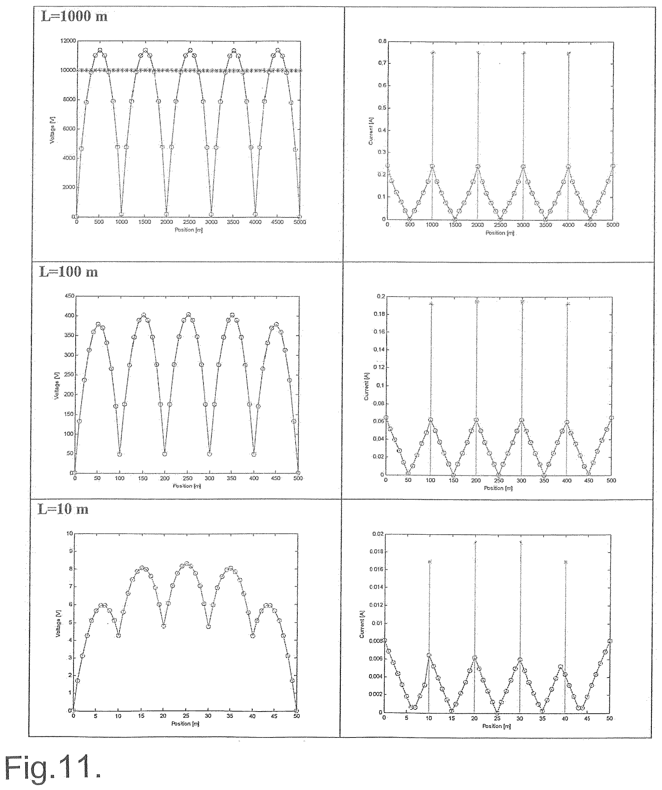

Fig. 11 shows schematically current and voltage diagrams for capacitive currents for different distances between the water channels C₁ in the longitudinal direction of the cable and without fibre optics conductor in the cross section thereof. The diagrams show the results when the water channels, or the draining holes C1, have a distance apart of 10, 100 and 1000meters along the length of the power umbilical K. In the analysis that was conducted one observed the effect of the capacitive charging currents on the voltage built up along the outer semiconductive cable sheath 1 having 6mm thickness. A cable voltage between the conductor and ground was 10kV at 50 Hz.

Fig. 12 shows another variant of a "piggyback" cable K₃ on a production pipe 10, i.e. having three cables mounted on and strapped securely to the production pipe 10 with approximately same circumferential distance apart from each other. The cables are distributed around the circumference in order to lower the operational temperature.

Fig. 13 shows schematically the electric current distribution within a DEH system. If the heating system, i.e. the entire system of pipes, connections and cables were electrically isolated from the seawater, all current from the distributors would be conducted in the steel pipe, which means optimum power efficiency for the system. However, from a practical point of view and over the life time of the system, it is not considered possible to keep the heating system ideally isolated from the seawater. Thus, an electric error due to ageing, or damage, on the insulation by accidence, results in large consequences for the safety and the reliability of the system.

## Claims

1. A power umbilical ( k1, k2, k5, k6, k7, k8) comprising
- at least one power cable (4) to transfer large amounts of electric energy/power,
- a set of elongate profile elements, being arranged in a twisted bundle around the at least one power cable (4),
- and a protective sheath (1) encapsulating the at least one power cable (4) and
the elongate profile elements (2, 3), wherein at least one of the elongate profile elements (2, 3), is made of a semiconducting material, said semiconducting material being able to drain off, or dissipate, capacitive currents arising in the power umbilical (k1, k2, k5, k6, k7, k8) when the at least one power cable (4) conducts large amounts of electric energy/power, said elongate profile elements (2, 3) further comprising longitudinal channels (9) adapted to communicate with radial extending holes or slits in the profile elements (2, 3) and through the protective sheath (1) such that when the power umbilical is deployed into the sea and the water is filling the channels (9), the holes or slits are transporting the capacitive currents into the surrounding sea water.

2. The power umbilical (k1, k2, k5, k6, k7, k8) according to claim 1, wherein the at least one of the elongate profile elements (2, 3) and the protective outer sheath (1) are made of a semiconductive material, such as polyethylene (PE), polyvinylchloride (PVC), polypropylene (PP) and acrylonitrile butadiene styrene (ABS), with addition of carbon.

3. The power umbilical (k1, k2, k5, k6, k7, k8) according to any of the claims 1-2, wherein at least one fibre optics conductor (5) is arranged in the power umbilical, said fibre optics conductor (5) having one or more optical fibre threads or filament adapted to monitor the condition of the power umbilical (k1, k2, k5, k6, k7, k8) continuously and generate a warning signal in case of temperature variation or an elongation within a fibre.

4. The power umbilical (k1, k2, k5, k6, k7, k8) according to any of the claims 1-3, wherein at least one additional metallic electric conductor (8) is arranged in the transverse cross section of the power umbilical and extends in the longitudinal direction of the power umbilical, said at least one electric conductor (8) being located separate from and external of the power cables (4), said at least one electric conductor (8) being able to drain off, or dissipate, capacitive currents arising in the power umbilical (K) when conducting large amounts of electric energy/power.

5. The power umbilical (k1, k2, k5, k6, k7, k8) according to any of the claims 1-4, wherein the power cables (4), the at least one elongate profile material (2, 3) and the at least one electric conductor (8) are SZ laid and closed together into a bundle, that is alternately are laid and closed together into a bundle by continuously alternating direction, in the entire or part of the longitudinal extension of the power umbilical, combined with that the SZ laid and closed bundle is kept fixed substantially torsion stiff by the protective sheath (1), or are alternatively laid and closed together into a bundle continuously helically.

6. The power umbilical (k1, k2, k5, k6, k7, k8) according to any of the claims 4-5, wherein the power cables (4), the elongate profile elements (2, 3) and the at least one electric conductor (8) are laid and closed together into a bundle continuously helically in a helix.

7. The power umbilical (k1, k2, k5, k6, k7, k8) according to any of the claims 1-6, wherein the power cables (4) are three-phase cables, said three-phase cables being arranged in a triangle within the transverse cross section thereof, that are either in contact with each other or with the semiconductive profiles.

8. The power umbilical (k1, k2, k5, k6, k7, k8) according to any of the claims 1-7, wherein the power umbilical (k1, k2, k5, k6, k7, k8) includes electric wires (6') and/or fibre optics conductors (5, 5') which also are laid and closed together into a bundle in a SZ configuration and are located internal of the outer sheath (1, 1'), or alternatively are laid and closed together into a bundle continuously helically.

9. The power umbilical (k1, k2, k5, k6, k7, k8) according to any of the claims 1-8, wherein at least one load carrying element (7, 7', 7", 7‴) is predetermined located in the transverse cross section of the power umbilical (k1, k2, k5, k6, k7, k8), said element (7, 7', 7", 7‴) also being laid and closed together into a bundle in a SZ configuration, or alternatively are laid and closed together into a bundle continuously helically.

10. The power umbilical (k1, k2, k5, k6, k7, k8) according to any of the claims 1-9, wherein the power umbilical includes an anti-rotation band or strength band, or a tape, which is helically winded about the bundle just internal of the protective sheath (1, 1'), or alternatively the strength band, or the tape, is helically winded around the bundle in two or more layers, laid and closed together into a bundle in opposite directions.

11. The power umbilical (k1, k2, k5, k6, k7, k8) according to claim 9, wherein the load carrying elements (7, 7', 7", 7‴) are carbon fibre rods, steel threads, steel wire, or a combination of these.

12. The power umbilical (k1, k2, k5, k6, k7, k8) according to any of the claims 1-11, wherein the power umbilical includes at least one fluid pipe (P₁, P₂) in its transverse cross section, said pipe being made of high ohm or nonconducting metal and/or plastic material, laid and closed together into a bundle in the same configuration as the other elements.

13. The power umbilical (k1, k2, k5, k6, k7, k8) according to claim 4-12, wherein the at least one fibre optics conductor (5) is arranged within a longitudinally extending channel in the elongate profile elements (2, 3) which form a protective layer surrounding the power cable (4) and an insulation of the power cables (4), said fibre optics conductor (5) having one or more optical fibre threads or filaments adapted to monitor the condition of the power umbilical (k1, k2, k5, k6, k7, k8) continuously and generate a warning signal in case of temperature increase or an elongation within the at least one fibre optics conductor (5).

14. The power umbilical (k1, k2, k5, k6, k7, k8) according to any one of claim 4-12 wherein the at least one fibre optics conductor (5) is arranged within an insulation layer that encapsulates the power cable (4), said fibre optics conductor (5) having one or more optical fibre threads or filaments adapted to monitor the condition of the power umbilical (k1, k2, k5, k6, k7, k8) continuously and generate a warning signal in case of temperature increase or an elongation within the at least one fibre optics conductor (5).

## Patentansprüche

1. Stromversorgungsleitung (k1, k2, k5, k6, k7, k8) umfassend
- mindestens ein Stromkabel (4) zur Übertragung großer Mengen an elektrischer Energie/Leistung,
- einen Satz länglicher Profilelemente, die in einem verdrillten Bündel um das mindestens eine Stromkabel (4) angeordnet sind,
- und einen Schutzmantel (1), der das mindestens eine Stromkabel (4) und die länglichen Profilelemente (2, 3) umschließt,
wobei mindestens eines der länglichen Profilelemente (2, 3) aus einem halbleitenden Material hergestellt ist, wobei das halbleitende Material in der Lage ist, kapazitive Ströme abzuleiten oder zu zerstreuen, die in der Stromversorgungsleitung (k1, k2, k5, k6, k7, k8) entstehen, wenn das mindestens eine Stromkabel (4) große Mengen an elektrischer Energie/Strom leitet, wobei die länglichen Profilelemente (2, 3) ferner Längskanäle (9) aufweisen, die so beschaffen sind, dass sie mit radial verlaufenden Löchern oder Schlitzen in den Profilelementen (2, 3) und durch die Schutzhülle (1) hindurch in Verbindung stehen, so dass die Löcher oder Schlitze die kapazitiven Ströme in das umgebende Meerwasser transportieren, wenn die Stromversorgungsleitung im Meer ausgebracht ist und das Wasser die Kanäle (9) füllt.

2. Stromversorgungsleitung (k1, k2, k5, k6, k7, k8) nach Anspruch 1, wobei mindestens eines der langgestreckten Profilelemente (2, 3) und der äußere Schutzmantel (1) aus einem halbleitenden Material, wie Polyethylen (PE), Polyvinylchlorid (PVC), Polypropylen (PP) und Acrylnitril-Butadien-Styrol (ABS), mit Kohlenstoffzusatz besteht.

3. Stromversorgungsleitung (k1, k2, k5, k6, k7, k8) nach einem der Ansprüche 1 und 2, wobei mindestens ein faseroptischer Leiter (5) in dem Versorgungskabel angeordnet ist, wobei der faseroptische Leiter (5) einen oder mehrere optische Faserfäden oder Filamente aufweist, die geeignet sind, den Zustand des Stromversorgungsleitung (k1, k2, k5, k6, k7, k8) kontinuierlich zu überwachen und ein Warnsignal im Falle einer Temperaturänderung oder einer Längung innerhalb einer Faser zu erzeugen.

4. Stromversorgungsleitung (k1, k2, k5, k6, k7, k8) nach einem der Ansprüche 1 bis 3, wobei im Querschnitt des Versorgungskabels mindestens ein zusätzlicher metallischer elektrischer Leiter (8) angeordnet ist, der sich in Längsrichtung des Versorgungskabels erstreckt, wobei der mindestens eine elektrische Leiter (8) getrennt von den Stromkabeln (4) und außerhalb derselben angeordnet ist, wobei der mindestens eine elektrische Leiter (8) in der Lage ist, kapazitive Ströme abzuleiten, die in der Versorgungsleitung (K) entstehen, wenn große Mengen an elektrischer Energie/Leistung geleitet werden.

5. Stromversorgungsleitung (k1, k2, k5, k6, k7, k8) nach einem der Ansprüche 1 bis 4, wobei die Stromkabel (4), das mindestens eine langgestreckte Profilmaterial (2, 3) und der mindestens eine elektrische Leiter (8) SZ-verlegt und zu einem Bündel geschlossen sind, d. h. abwechselnd in kontinuierlich wechselnder Richtung zu einem Bündel verlegt und geschlossen sind, in der gesamten oder einem Teil der Längsrichtung des Versorgungskabels zu einem Bündel verlegt und geschlossen sind, kombiniert damit, dass das SZ-verlegte und geschlossene Bündel durch den Schutzmantel (1) im Wesentlichen torsionssteif gehalten wird, oder alternativ schraubenförmig zu einem Bündel verlegt und geschlossen sind.

6. Stromversorgungsleitung (k1, k2, k5, k6, k7, k8) nach einem der Ansprüche 4 und 5, **dadurch gekennzeichnet, dass** die Stromkabel (4), die langgestreckten Profilelemente (2, 3) und der mindestens eine elektrische Leiter (8) durchgehend wendeiförmig zu einem Bündel verlegt und zusammengeschlossen sind.

7. Stromversorgungsleitung (k1, k2, k5, k6, k7, k8) nach einem der Ansprüche 1 bis 6, wobei die Stromkabel (4) dreiphasig sind, wobei die dreiphasigen Kabel in ihrem Querschnitt in einem Dreieck angeordnet sind, das entweder miteinander oder mit den Halbleiterprofilen in Kontakt steht.

8. Stromversorgungsleitung (k1, k2, k5, k6, k7, k8) nach einem der Ansprüche 1 bis 7, wobei das Versorgungskabel (k1, k2, k5, k6, k7, k8) elektrische Leitungen (6') und/oder Lichtwellenleiter (5, 5') enthält, die ebenfalls in SZ-Konfiguration zu einem Bündel verlegt und geschlossen sind und sich innerhalb des Außenmantels (1, 1') befinden, oder alternativ spiralförmig durchgehend zu einem Bündel verlegt und geschlossen sind.

9. Stromversorgungsleitung (k1, k2, k5, k6, k7, k8) nach einem der Ansprüche 1 bis 8, wobei mindestens ein lasttragendes Element (7, 7', 7", 7"') im Querschnitt des Stromversorgungsleitung (k1, k2, k5, k6, k7, k8) festgelegt angeordnet ist, wobei dieses Element (7, 7', 7", 7"') auch in einer SZ-Konfiguration zu einem Bündel zusammengelegt und geschlossen ist, oder alternativ schraubenförmig kontinuierlich zu einem Bündel zusammengelegt und geschlossen ist.

10. Stromversorgungsleitung (k1, k2, k5, k6, k7, k8) nach einem der Ansprüche 1 bis 9, wobei das Versorgungskabel ein Anti-Rotationsband oder ein Festigkeitsband oder ein Band enthält, das schraubenförmig um das Bündel direkt innerhalb der Schutzhülle (1, 1') gewickelt ist, oder dass alternativ das Festigkeitsband oder das Band schraubenförmig um das Bündel in zwei oder mehr Lagen gewickelt ist, die in entgegengesetzten Richtungen zu einem Bündel zusammengelegt und geschlossen sind.

11. Stromversorgungsleitung (k1, k2, k5, k6, k7, k8) nach Anspruch 9, wobei die lasttragenden Elemente (7, 7', 7", 7"') Kohlenstofffaserstäbe, Stahlfäden, Stahldraht oder eine Kombination davon sind.

12. Stromversorgungsleitung (k1, k2, k5, k6, k7, k8) nach einem der Ansprüche 1 bis 11, wobei das Versorgungskabel in seinem Querschnitt mindestens ein Fluidrohr (P₁, P₂) aufweist, das aus hochohmigem oder nichtleitendem Metall und/oder Kunststoff besteht und in der gleichen Konfiguration wie die anderen Elemente zu einem Bündel verlegt und geschlossen ist.

13. Stromversorgungsleitung (k1, k2, k5, k6, k7, k8) nach Anspruch 4 bis 12, wobei der mindestens eine faseroptische Leiter (5) innerhalb eines sich in Längsrichtung erstreckenden Kanals in den länglichen Profilelementen (2, 3) angeordnet ist, die eine das Stromkabel (4) umgebende Schutzschicht und eine Isolierung der Stromkabel (4) bilden, wobei der faseroptische Leiter (5) einen oder mehrere optische Fäden oder Filamente aufweist, die geeignet sind, den Zustand der Stromversorgungsleitung (k1, k2, k5, k6, k7, k8) kontinuierlich zu überwachen und im Falle eines Temperaturanstiegs oder einer Dehnung innerhalb des mindestens einen faseroptischen Leiters (5) ein Warnsignal zu erzeugen.

14. Stromversorgungsleitung (k1, k2, k5, k6, k7, k8) nach einem der Ansprüche 4 bis 12, wobei der mindestens eine faseroptische Leiter (5) innerhalb einer Isolierschicht angeordnet ist, die das Stromkabel (4) einkapselt, wobei der faseroptische Leiter (5) einen oder mehrere optische Faserfäden oder Filamente aufweist, die dazu geeignet sind, den Zustand der Stromversorgungsleitung (k1, k2, k5, k6, k7, k8) kontinuierlich zu überwachen und ein Warnsignal im Falle eines Temperaturanstiegs oder einer Dehnung innerhalb des mindestens einen faseroptischen Leiters (5) zu erzeugen.

## Revendications

1. Câble d'alimentation électrique (k1, k2, k5, k6, k7, k8) comprenant
- au moins un câble d'alimentation (4) pour transférer de grandes quantités d'énergie/de puissance électrique,
- un ensemble d'éléments profilés allongés, étant agencés en un faisceau torsadé autour du au moins un câble d'alimentation (4),
- et une gaine de protection (1) encapsulant le au moins un câble d'alimentation (4) et les éléments profilés allongés (2, 3), dans lequel au moins l'un des éléments profilés allongés (2, 3) est réalisé en un matériau semi-conducteur, ledit matériau semi-conducteur étant capable de drainer ou de dissiper des courants capacitifs survenant dans le câble d'alimentation électrique (k1, k2, k5, k6, k7, k8) lorsque le au moins un câble d'alimentation (4) conduit de grandes quantités d'énergie/de puissance électrique, lesdits éléments profilés allongés (2, 3) comprenant en outre des canaux longitudinaux (9) adaptés pour communiquer avec des trous ou des fentes s'étendant radialement dans les éléments profilés (2, 3) et à travers la gaine de protection (1) de telle sorte que lorsque le câble d'alimentation électrique est déployé dans la mer et que l'eau remplit les canaux (9), les trous ou les fentes transportent les courants capacitifs dans l'eau de mer environnante.

2. Câble d'alimentation électrique (k1, k2, k5, k6, k7, k8) selon la revendication 1, dans lequel le au moins un des éléments profilés allongés (2, 3) et la gaine externe de protection (1) sont réalisés en un matériau semi-conducteur, tel que le polyéthylène (PE), le polychlorure de vinyle (PVC), le polypropylène (PP) et l'acrylonitrile-butadiène-styrène (ABS), avec addition de carbone.

3. Câble d'alimentation électrique (k1, k2, k5, k6, k7, k8) selon l'une quelconque des revendications 1 et 2, dans lequel au moins un conducteur à fibre optique (5) est agencé dans le câble d'alimentation électrique, ledit conducteur à fibre optique (5) présentant un ou plusieurs fils ou filaments de fibre optique adaptés pour surveiller l'état du câble d'alimentation électrique (k1, k2, k5, k6, k7, k8) en continu et générer un signal d'avertissement en cas de variation de température ou d'un allongement à l'intérieur d'une fibre.

4. Câble d'alimentation électrique (k1, k2, k5, k6, k7, k8) selon l'une quelconque des revendications 1 à 3, dans lequel au moins un conducteur électrique métallique supplémentaire (8) est agencé dans la section transversale du câble d'alimentation électrique et s'étend dans la direction longitudinale du câble d'alimentation électrique, ledit au moins un conducteur électrique (8) étant situé séparément des câbles d'alimentation (4) et à l'extérieur de ceux-ci, ledit au moins un conducteur électrique (8) étant capable de drainer ou de dissiper des courants capacitifs apparaissant dans le câble d'alimentation électrique (K) lorsqu'il conduit de grandes quantités d'énergie/de puissance électrique.

5. Câble d'alimentation électrique (k1, k2, k5, k6, k7, k8) selon l'une quelconque des revendications 1 à 4, dans lequel les câbles d'alimentation (4), le au moins un matériau profilé allongé (2, 3) et le au moins un conducteur électrique (8) sont disposés en SZ et fermés ensemble en un faisceau, à savoir sont disposés en alternance et fermée ensemble en un faisceau par une direction alternée de manière continue, dans la totalité ou une partie de l'extension longitudinale du câble d'alimentation électrique, combiné avec le fait que le faisceau disposé en SZ et fermé est maintenu fixé de manière sensiblement rigide en torsion par la gaine de protection (1), ou sont disposés en SZ et fermés ensemble de manière alternée en un faisceau de manière continue hélicoïdalement.

6. Câble d'alimentation électrique (k1, k2, k5, k6, k7, k8) selon l'une quelconque des revendications 4 et 5, dans lequel les câbles d'alimentation (4), les éléments profilés allongés (2, 3) et le au moins un conducteur électrique (8) sont disposés et fermés ensemble en un faisceau de manière continue hélicoïdalement dans une hélice.

7. Câble d'alimentation électrique (k1, k2, k5, k6, k7, k8) selon l'une quelconque des revendications 1 à 6, dans lequel les câbles d'alimentation (4) sont des câbles triphasés, lesdits câbles triphasés étant agencés en un triangle à l'intérieur de la section transversale de ceux-ci, qui sont en contact les uns avec les autres ou avec les profilés semi-conducteurs.

8. Câble d'alimentation électrique (k1, k2, k5, k6, k7, k8) selon l'une quelconque des revendications 1 à 7, dans lequel le câble d'alimentation électrique (k1, k2, k5, k6, k7, k8) comprend des fils électriques (6') et/ou des conducteurs à fibre optique (5, 5') qui sont également posés et fermés ensemble en un faisceau dans une configuration SZ et sont situés à l'intérieur de la gaine externe (1, 1'), ou en variante sont disposés et fermés ensemble en un faisceau de manière continue hélicoïdalement.

9. Câble d'alimentation électrique (k1, k2, k5, k6, k7, k8) selon l'une quelconque des revendications 1 à 8, dans lequel au moins un élément de support de charge (7, 7', 7", 7‴) est prédéterminé situé dans la section transversale du câble d'alimentation électrique (k1, k2, k5, k6, k7, k8), ledit élément (7, 7', 7", 7‴) étant également disposé et fermé ensemble en un faisceau dans une configuration SZ, ou en variante sont disposés et fermés ensemble en un faisceau de manière continue hélicoïdalement.

10. Câble d'alimentation électrique (k1, k2, k5, k6, k7, k8) selon l'une quelconque des revendications 1 à 9, dans lequel le câble d'alimentation électrique comprend une bande anti-rotation ou une bande de résistance, ou un ruban, qui est enroulé€ hélicoïdalement autour du faisceau juste à l'intérieur de la gaine de protection (1, 1'), ou en variante la bande de résistance, ou le ruban, est enroulé€ en hélice autour du faisceau en deux couches ou plus, disposées et fermées ensemble en un faisceau dans des directions opposées.

11. Câble d'alimentation électrique (k1, k2, k5, k6, k7, k8) selon la revendication 9, dans lequel les éléments de support de charge (7, 7', 7", 7‴) sont des tiges de fibre de carbone, des filets en acier, un fil d'acier ou une combinaison de ceux-ci.

12. Câble d'alimentation électrique (k1, k2, k5, k6, k7, k8) selon l'une quelconque des revendications 1 à 11, dans lequel le câble d'alimentation électrique comprend au moins un tuyau de fluide (P1, P2) dans sa section transversale, ledit tuyau étant réalisé en métal et/ou en matière plastique à haut ohm ou non conducteur, disposés et fermés ensemble en un faisceau dans la même configuration que les autres éléments.

13. Câble d'alimentation électrique (k1, k2, k5, k6, k7, k8) selon les revendications 4 à 12, dans lequel le au moins un conducteur à fibre optique (5) est agencé à l'intérieur d'un canal s'étendant longitudinalement dans les éléments profilés allongés (2, 3) qui forment une couche protectrice entourant le câble d'alimentation (4) et une isolation des câbles d'alimentation (4), ledit conducteur à fibre optique (5) présentant un ou plusieurs fils ou filaments de fibre optique adaptés pour surveiller l'état du câble d'alimentation électrique (k1, k2, k5, k6, k7, k8) en continu et générer un signal d'avertissement en cas d'augmentation de température ou d'un allongement à l'intérieur du au moins un conducteur à fibre optique (5).

14. Câble d'alimentation électrique (k1, k2, k5, k6, k7, k8) selon l'une quelconque des revendications 4 à 12, dans lequel le au moins un conducteur à fibre optique (5) est agencé à l'intérieur d'une couche d'isolation qui encapsule le câble d'alimentation (4), ledit conducteur à fibre optique (5) présentant un ou plusieurs fils ou filaments de fibre optique adaptés pour surveiller l'état du câble d'alimentation électrique (k1, k2, k5, k6, k7, k8) en continu et générer un signal d'avertissement dans le cas d'une augmentation de température ou d'un allongement à l'intérieur du au moins un conducteur de fibre optique (5).
